# EUROPEAN PATENT APPLICATION

(11) **EP 3 845 368 A1**
(43) Date of publication of application: **07.07.2021**
(21) Application number: 19461623.1
(22) Date of filing: 30.12.2019
(51) Int. Cl.: B29C 71/00, B29C 64/188, B33Y 40/20, C08J 7/02, C08J 7/04, C08J 7/043

(54) **A METHOD FOR SMOOTHING PLASTIC OBJECTS AND A SMOOTHING COMPOSITION**

(71) Applicant: Centrum Projektowania i Budowy Prototypow Malpol Sp. z o.o., 67-100 Lubieszow (PL)
(72) Inventor: WALASEK, Marcin, 67-100 Lubieszow (PL)
(74) Representative: Kancelaria Eupatent.pl Sp. z.o.o

(57) **Abstract**

A smoothing composition for smoothing a surface of objects made from thermoplastics, the composition comprising a base mixture that comprises: 5 parts by volume of an extracting solvent; 3 parts by volume of limestone powder; 5 parts by volume of colloidal silica; and 87 parts by volume of a resin solution.

## Description

### TECHNICAL FIELD

The present invention relates to smoothing plastic objects, in particular objects made of thermoplastic polymers by additive manufacturing.

### BACKGROUND

Additive manufacturing (also referred to as 3D-printing) is a manufacturing technique that builds objects in an additive fashion, usually layer-by-layer. A common method of additive manufacturing is fused deposition modeling (FDM), called also fused filament fabrication (FFF).

The FDM/FFF method is based on feeding a thermoplastic polymer in a form of a continuous filament into a heated nozzle, wherein the filament is melted and then extruded. The extruder assembly is moved three-dimensionally using precise step motors under the control of computer-aided manufacturing (CAM) software. The additive-manufactured object is created in layers in such a away that the first layer of the object is deposited on a build substrate, whereas further layers are sequentially deposited to preceding layer. During the deposition process, the subsequently applied layers fuse with the previously applied layers, cool down and solidify. The forming of the object is continued in such layer-by-layer manner until the object is completely constructed.

Depositing the material in layers that solidify and fuse to previous layers individually results in a surface that has ridges or edges. Such a rough surface may not be desirable for various reasons, such as difficulty to efficiently cover it with additional surface finishing, such as painting, or aesthetical appeal. Therefore, there is a need to post-process such additive-manufactured objects in order to reduce the roughness of their surface.

One method of reducing the roughness of the finish on an object made using FDM/FFF additive manufacturing process known in prior art is sanding or similar technique using an abrasive material aiming at removing some of the solidified filament. While relatively simple, in practice such method requires advanced control skills and labor to provide desired smoothness without negatively affecting the overall shape of the object. An alternative version of this method is to apply shot blasting with some media instead of abrasive material. While this method reduces the risk of overheating of the object due to the heat generated by the friction between the abrasive material and the polymer, it still needs extensive experience in controlling the process, labor and time to make this method effective.

Another method is based on exposing the additive-manufactured object to a mist of micron-sized droplets from a liquid in a closed chamber for a predetermined period of time, such as for example described in details in a PCT application WO2016201614. While quicker and demanding less skills than the mechanical finishing methods, it still requires a dedicated chamber to perform the process.

Moreover, all methods mentioned above are based on removing protruding parts only, but they do not allow to fill recesses of the object.

Thus, there is need to provide an improved method and means to process objects made from a thermoplastic material using additive manufacturing that will avoid the need to use a dedicated chamber for this purpose and be more efficient in smoothing the object edges by filling the recesses between them during the process.

### SUMMARY

The object of the invention is a smoothing composition for smoothing a surface of objects made from thermoplastics, the composition comprising a base mixture that comprises: 5 parts by volume of an extracting solvent; 3 parts by volume of limestone powder; 5 parts by volume of colloidal silica; and 87 parts by volume of a resin solution.

The smoothing composition may further comprise a curing agent in amount of 1 part per 16 parts of the base mixture.

Another object of the invention is a method for smoothing a surface of objects made from thermoplastics, the method comprising: providing the smoothing composition according to any of previous claims; mixing the base mixture with the curing agent; applying the smoothing composition onto the surface of the object to be smoothed.

The method may further comprise applying the composition by spraying.

The method may further comprise, prior to applying the smoothing composition, sanding the surface of the object by a sanding paper having an ISO/FEPA grit from P100 to P300.

The method may further comprise applying more than one layer of the smoothing composition.

The method according to the invention allows smoothing objects by spraying a smoothing composition according to the invention on the surface of the objects, which can be performed using a standard, simple finishing equipment such as a paint gun. The liquid smoothing composition deposited on the rough surface of the object fills the recesses between the edges resulting in a smoothed surface of the object. The method is therefore particularly applicable to smoothing surfaces of relatively large objects, for which is would be not convenient to use prior art techniques that require a dedicated chamber to perform the smoothing process.

The components of the smoothing composition cause dissolving of the outer layer of the smoothed object surface and diffusing the smoothing composition into the outer layer (by about 10 micrometers), consequently the applied layer of the smoothing composition integrates well with the smoothed object. The initial curing time is in the order of dozens of minutes, therefore the smoothing composition can be used conveniently with spraying devices for a time sufficient to be applied over a surface of a relatively large object without causing clogging of the nozzle of the spraying device. The smoothing composition has an appropriate density such that it adheres to the surface of the smoothed object and does not flow away and does not leave trails.

The smoothing composition as described herein has the following properties after applying on the product:
- initial curing of a single layer at a temperature of 21°C is 65 minutes
- initial curing of a single layer at a temperature of 35°C is 40 minutes
- full curing of a single layer at a temperature of 21°C is 11 hours
- full curing of a single layer at a temperature of 35°C is 7 hours
- a second layer can be applied 25 minutes since application of the first layer
- initial curing of two layers at a temperature of 21°C is 90 minutes
- initial curing of two layers at a temperature of 35°C is 65 minutes
- full curing of two layers at a temperature of 21°C is 14 hours
- full curing of two layers at a temperature of 35°C is 8 hours

The objects whose surface is coated by the smoothing composition according to the invention are characterized by reduced coarseness, as the smoothing composition fills in the recesses in their surface.

### DETAILED DESCRIPTION

The invention refers to smoothing objects made from thermoplastics, such as ABS (acrylonitrile butadiene styrene), PLA (polylactide), HIPS (high impact polystyrene) or laminates based on polyester or epoxy resins. It is particularly useful for smoothing surfaces of objects made by additive manufacturing, which contain edges and recesses along the edges of the subsequently deposited layers.

The smoothing composition comprises a base mixture that comprises:
- an extracting solvent in amount of 5 parts by volume;
- limestone powder in amount of 3 parts by volume;
- colloidal silica in amount of 5 parts by volume;
- a resin solution in amount of 87 parts by volume.
Preferably, the parts are percentages. However, alternative embodiments are also possible with additives, such as pigments, for example in amount of up to 2 parts by volume.

The extracting solvent is used to improve the adherence of the smoothing composition to the surface of the smoothed object. The extracting solvent can be a mixture of 70% by volume of benzine (such as low boiling point extraction gasoline), 5% by volume of tulene, 5% by volume of acetone, 10% by volume of 2-butanol and 10% by volume of butyl acetate.

The limestone powder is used to reduce the flow of the composition over the smoothed surface. Preferably, it has a grain size from 0,075 to 0,100 mm.

The colloidal silica is used as a filler for the recesses in the smoothed surface. For example, an 85% water colloid of SiO₂ having a bulk density of 150g/dm³ can be used.

The resin solution can be based on an epoxy resin, for example it can be a mixture of epoxy resin (90% by volume), styrene (7% by volume) and phenol (3% by volume).

Before use of the smoothing composition, the base mixture should be mixed with a curing agent. For example, Ketox (by CSV Kompozyty Sp. z o.o.) can be used as a curing agent for a resin solution based on an epoxy resin, in a ration of curing agent:base mixture equal to 1:16.

The smoothing composition is applied onto the surface of the object to be smoothed. It can be applied by spraying using known means, such as spray guns (for spraying a mixture of the base mixture and the curing agent prepared shortly before use) or spray cans (comprising a predetermined amount of the base mixture and the curing agent and means to mix them before use of the spray can). Preferably, the spraying nozzle shall have a diameter from 1,6 mm to 2,0 mm. The smoothing composition shall be sprayed from a distance of 18 to 25 cm from the smoothed object surface.

Before the smoothing composition is applied on the surface of the object, that surface can be first smoothed by machine processing, for example by sanding it by means of a sanding paper, such as a sanding paper having an ISO/FEPA grit from P100 to P300. This allows to reduce the amount of the smoothing composition to be used to achieve the final result.

The smoothing composition can be applied in more than one layer, wherein the subsequent layers are. The curing time of the layers can be shortened by increasing the ambient temperature.

Preferably, the smoothing composition can be applied as a layer having a thickness of up to 150 micrometers. Preferably, the total thickness of all applied layers shall be up to 450 micrometers.

## Claims

1. A smoothing composition for smoothing a surface of objects made from thermoplastics, the composition comprising a base mixture that comprises:
- 5 parts by volume of an extracting solvent;
- 3 parts by volume of limestone powder;
- 5 parts by volume of colloidal silica; and
- 87 parts by volume of a resin solution.

2. The smoothing composition according to claim 1, further comprising a curing agent in amount of 1 part per 16 parts of the base mixture.

3. A method for smoothing a surface of objects made from thermoplastics, the method comprising:
- providing the smoothing composition according to any of previous claims;
- mixing the base mixture with the curing agent;
- applying the smoothing composition onto the surface of the object to be smoothed.

4. The method according to claim 3 comprising applying the composition by spraying.

5. The method according to any of claims 3-4, further comprising, prior to applying the smoothing composition, sanding the surface of the object by a sanding paper having an ISO/FEPA grit from P100 to P300.

6. The method according to any of claims 3-5, comprising applying more than one layer of the smoothing composition.
